(19) **Europäisches Patentamt European Patent Office Office européen des brevets**

(11) **EP 1 186 634 B1**

(12) **EUROPEAN PATENT SPECIFICATION**

(45) Date of publication and mention
of the grant of the patent:
**11.11.2009 Bulletin 2009/46**

(51) Int Cl.:
*C08L 77/00* (2006.01)　　*C08L 77/06* (2006.01)
*C08L 77/02* (2006.01)

(21) Application number: **01121637.1**

(22) Date of filing: **12.09.2001**

(54) **Polyamide resin composition**

Polyamidharz-Zusammensetzung

Composition à base de résine polyamide

(84) Designated Contracting States:
**BE DE FR GB NL SE**

(30) Priority: **12.09.2000 JP 2000276350**

(43) Date of publication of application:
**13.03.2002 Bulletin 2002/11**

(73) Proprietor: **KURARAY CO., LTD.**
**Kurashiki City, Okayama Prefecture 710 (JP)**

(72) Inventors:
• **Matsuoka, Hideharu**
**Tsukuba-City,**
**Ibaragi-Pref. (JP)**
• **Sasaki, Shigeru**
**Tsukuba-City,**
**Ibaragi-Pref. (JP)**
• **Oka, Hideaki**
**Tsukuba-City,**
**Ibaragi-Pref. (JP)**

(74) Representative: **Vossius & Partner**
**Siebertstraße 4**
**81675 München (DE)**

(56) References cited:
**WO-A-95/18178　　WO-A-97/31063**
**US-A- 5 354 802**

## Description

The present invention relates to a polyamide resin composition and its moldings. The polyamide resin composition of the invention has good flame retardancy, good chemical resistance, good surface appearance and good blistering resistance, and is therefore favorable to applications that require flame retardancy and good mechanical properties, for example, to industrial materials, engineering materials, household utensils, components of electric and electronic appliances or automobile parts.

As materials having good heat resistance, good chemical resistance, high stiffness, good abrasion resistance and good moldability, aliphatic polyamides such as nylon 6 and nylon 66 are much used for engineering plastics. In the field of electrics and electronics, engineering plastics are required to have high flame retardancy, and various methods of making them resistant to flames with various flame retardants have been proposed and put into practical use. However, as aliphatic polyamides have the property of absorbing water, their moldings are often problematic in that their dimensions vary and their physical properties worsen when they have absorbed water. The recent tendency in the field of electrics and electronics that require flame retardancy is toward great development of surface mounting techniques (SMT), to which, however, conventional polyamide resins are now unsuitable since their heat resistance is unsatisfactory.

Given that situation, semiaromatic polyamides of higher heat resistance which consist essentially of an aliphatic alkylenediamine and terephthalic acid are being used in the field of flame-retardant electrics and electronics. For example, in JP-A 239755/1991, 96970/1992, 320503/1993 and 263985/1994, polyamide resin compositions are proposed that comprise a semiaromatic polyamide and a polybromostyrene serving as a flame retardant.

However, in the semiaromatic polyamide resin compositions containing such a polybromostyrene, the semiaromatic polyamide is poorly compatible with the polybromostyrene, and therefore the flame retardant, polybromostyrene could not well disperse in the resin compositions. As a result, the moldings of the polyamide resin compositions are often problematic in that their chemical resistance is low and their surface often peels and is roughened. The problem is serious in colored moldings, as their roughened surface is whitish and looks bad.

US-A-5,354,802 describes a resin composition for blow molding prepared by compounding 100 parts by weight of a resin component composed of: (A) 1 to 99 parts by weight of a thermoplastic polyester resin mainly comprising an aromatic dicarboxylic acid or the ester forming derivative thereof and an aliphatic dihydroxy compound having 2 to 8 carbon atoms and (B) 99 to 1 parts by weight of a thermoplastic polyamide resin with (C) 0.2 to 10 parts by weight of a styrenic copolymer comprising 40 to 97% by weight of styrene, 60 to 3% by weight of a glycidyl ester of an $\alpha,\beta$-unsaturated acid and 0 to 50% by weight of another vinylic monomer and (D) 0 to 100 parts by weight of at least one member among fibrous, granular and plate fillers and kneading the resulting mixture in a molten state.

Accordingly, the object of the present invention is to provide a polyamide resin composition and its moldings having good flame retardancy, good chemical resistance, good surface appearance and good blistering resistance.

It has been found that a polyamide resin composition having good flame retardancy, good chemical resistance, good surface appearance and good blistering resistance can be obtained by adding a polybromostyrene having an epoxy group in the molecule to a semiaromatic polyamide.

Specifically, the invention provides a polyamide resin composition comprising 100 parts by weight of a polyamide resin (A) that comprises dicarboxylic acid units (a) containing from 60 to 100 mol% of terephthalic acid units and diamine units (b) containing from 60 to 100 mol% of C6-18 aliphatic alkylenediamine units, and from 1 to 100 parts by weight of a polybromostyrene (B), in which from 0.5 to 100 % by weight of the polybromostyrene (B) is a polybromostyrene having an epoxy group, wherein the C6-18 aliphatic alkylenediamine units constituting the polyamide resin (A) are 1,9 nonanediamine units and/or 2-methyl-1,8-octanediamine units. The invention also provides moldings of the polyamide resin composition.

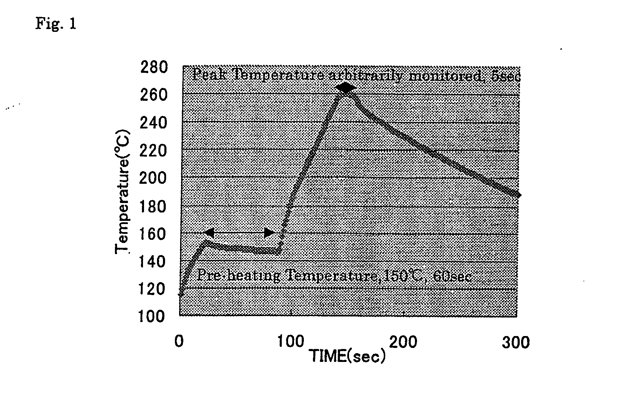

Fig. 1 is a graph of a temperature profile of test pieces heated in an IR furnace.

The invention is described in detail below.

The dicarboxylic acid units (a) that constitute the polyamide resin (A) for use in the invention contain from 60 to 100 mol% of terephthalic acid units, preferably from 75 to 100 mol%, more preferably from 90 to 100 mol% thereof. If the terephthalic acid unit content of the polyamide resin (A) is smaller than 60 mol%, the heat resistance of the resulting polyamide resin composition is low.

The dicarboxylic acid units (a) may contain at most 40 mol% of any other dicarboxylic acid units than terephthalic acid units. The other dicarboxylic acid units include, for example, units derived from aliphatic dicarboxylic acids such as malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid and suberic acid; alicyclic dicarboxylic acids such as 1,3-cyclopentanedicarboxylic acid and 1,4-cyclohexanedicarboxylic acid; and aromatic dicarboxylic acids such as isophthalic acid, 2,6-naphthalenedicarboxylic acid, 2,7-naphthalenedicarboxylic acid, 1,4-naphthalenedicarboxylic acid, 1,4-phenylenedioxy-diacetic acid, 1,3-phenylenedioxy-diacetic acid, diphenic acid, 4,4'-oxydibenzoic acid, diphenylmethane-4,4'-dicarboxylic acid, diphenylsulfone-4,4'-dicarboxylic acid and 4,4'-biphenyldicarboxylic acid. The polyamide resin may contain one or more types of those additional units. Of the additional units, preferred are those derived from aromatic dicarboxylic acids. The additional dicarboxylic acid unit content of the polyamide resin is preferably at most 25 mol%, more preferably at most 10 mol%. If desired, the polyamide resin may further contain units derived from polycarboxylic acids such as trimellitic acid, trimesic acid and pyromellitic acid within a limited range within which the polyamide resin composition is moldable in melt.

The diamine units (b) that constitute the polyamide resin (A) for use in the invention contain from 60 to 100 mol% of C6-18 aliphatic alkylenediamine units, preferably from 75 to 100 mol%, more preferably from 90 to 100 mol% thereof. If the C6-18 aliphatic alkylenediamine unit content of the polyamide resin (A) is smaller than 60 mol%, the properties including the heat resistance, the water absorption resistance and the chemical resistance of the resulting polyamide resin composition are poor. The C6-18 aliphatic alkylenediamine units include 1,9-nonanediamine, and/or 2-methyl-1,8-octanediamine. Where 1,9-nonanediamine units and 2-methyl-1,8-octanediamine units are combined to be in the polyamide resin, it is desirable that the ratio by mol of 1,9-nonanediamine units/2-methyl-1,8-octanediamine units falls between 99/1 and 1/99, more preferably between 95/5 and 40/60, even more preferably between 90/10 and 80/20. The polyamide resin composition in which the polyamide resin contains 1,9-nonanediamine units and/or 2-methyl-1,8-octanediamine units in the ratio defined above is preferred, as having better heat resistance, better moldability, better water absorption resistance and better surface appearance.

The diamine units (b) may contain at most 40 mol% of any other diamine units than C6-18 aliphatic alkylenediamine units. The other diamine units include, for example, units derived from aliphatic diamines such as ethylenediamine, propanediamine and 1,4-butanediamine; alicyclic diamines such as cyclohexanediamine, methylcyclohexanediamine, isophoronediamine, norbornanedimethylamine and tricyclodecanedimethylamine; aromatic diamines such as p-phenylenediamine, m-phenylenediamine, p-xylylenediamine, m-xylylenediamine, 4,4'-diaminodiphenylmethane, 4,4'-diaminodiphenyl sulfone and 4,4'-diaminodiphenyl ether. The polyamide resin may contain one or more types of these units. The additional diamine unit content of the polyamide resin is preferably at most 25 mol%, more preferably at most 10 mol%.

Preferably, at least 10 % of the terminal groups in the molecular chains of the polyamide resin (A) for use in the invention are blocked with a terminal-blocking agent. More preferably, in the molecular chains of the polyamide resin (A), the ratio of the terminal groups blocked with a terminal-blocking agent (degree of terminal-blocking) is at least 40 %, even more preferably at least 70 %. The polyamide resin composition in which the polyamide resin has a degree of terminal-blocking of at least 10 % has better physical properties, for example, having better melt moldability and better surface appearance.

The degree of terminal-blocking in the polyamide resin (A) can be obtained by counting the number of the terminal carboxyl groups, the terminal amino groups and the terminal groups blocked with a terminal-blocking agent. Concretely, it is derived from the following formula (1). In view of the accuracy and the easiness in the measurement operation, it is desirable that the number of the terminal groups in the polyamide resin is obtained through $^{1}$H-NMR in which the data for the specific signals corresponding to the terminal groups are separately integrated.

$$\texttt{Degree of Terminal-Blocking (\%) = [(X - Y)/X] × 100 \quad (1)}$$

wherein X indicates the total number of all terminal groups in the molecular chains of the polyamide resin (in general, this is equal to two times the number of the polyamide molecules), and
Y indicates the total number of both the terminal carboxyl groups and the terminal amino groups in the molecular chains of the polyamide resin.

The terminal-blocking agent for use herein is not specifically defined, and may be any and every monofunctional compound reactive with the terminal amino or carboxyl groups in polyamides. Preferred for it are monocarboxylic acids and monoamines, since their reactivity is high and since the terminals of polyamides are stably blocked with them. More preferred are monocarboxylic acids, as they are easy to handle. In addition, also usable are acid anhydrides such as phthalic anhydride, as well as monoisocyanates, mono-acid halides, monoesters and monoalcohols.

The monocarboxylic acids herein usable for the terminal-blocking agent are not specifically defined, provided that they are reactive with amino groups. For example, they include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid and isobutyric acid; alicyclic monocarboxylic acids such as cyclohexanecarboxylic acid; aromatic monocarboxylic acids such as benzoic acid, toluic acid, α-naphthalenecarboxylic acid, β-naphthalenecarboxylic acid, methylnaphthalenecarboxylic acid and phenylacetic acid; and mixtures of any of them. Of those, preferred are acetic acid, propionic acid, butyric acid, valeric acid, caproic acid, caprylic acid, lauric acid, tridecanoic acid, myristic acid, palmitic acid, stearic acid and benzoic acid, in view of their reactivity and costs and of the stability of the blocked terminals.

The monoamines herein usable for the terminal-blocking agent are not also specifically defined, provided that they are reactive with carboxyl groups. For example, they include aliphatic monoamines such as methylamine, ethylamine, propylamine, butylamine, hexylamine, octylamine, decylamine, stearylamine, dimethylamine, diethylamine, dipropylamine and dibutylamine; alicyclic monoamines such as cyclohexylamine and dicyclohexylamine; aromatic monoamines such as aniline, toluidine, diphenylamine and naphthylamine; and mixtures of any of them. Of those, preferred are butylamine, hexylamine, octylamine, decylamine, stearylamine, cyclohexylamine and aniline, since they are highly reactive and inexpensive and have a high boiling point and since the blocked terminals are stable.

The polyamide resin (A) for use in the invention can be produced by any method known for producing crystalline polyamides. For example, it may be produced by a method of solution polymerization or interfacial polymerization starting from acid chlorides and diamines, or by a method of melt polymerization, solid-phase polymerization or melt-extrusion polymerization starting from dicarboxylic acids and diamines.

Concretely, one example of the process for producing the polyamide resin (A) is as follows. A diamine, a dicarboxylic acid, a catalyst and optionally a terminal-blocking agent are fed into a reactor all at a time to prepare a nylon salt; then it is polymerized under heat at 200 to 250°C to give a prepolymer having an intrinsic viscosity [η] in concentrated sulfuric acid at 30°C of from 0.1 to 0.6 dl/g; and finally it is further polymerized in a solid phase or through extrusion in melt to a polyamide resin. The process in which the prepolymer formed has an intrinsic viscosity [η] falling between 0.1 and 0.6 dl/g is preferred, since the molar balance of the carboxyl group and the amino group in the latter-stage polymerization of the prepolymer is good and since the polymerization speed is not lowered. Having these advantages, the process therefore enables production of polyamide resins having narrower molecular weight distribution and having better physical properties and better moldability.In the casewhere the final polymerization is effected in a solid phase, it is desirable that the reaction pressure is reduced or an inert gas flow is introduced into the reaction system. Also preferably, the reaction temperature is controlled to fall between 200 and 280°C for further increasing the polymerization speed. In that manner, the productivity is increased and the polyamide resins produced are effectively prevented from yellowing or gelling. For the melt-extrusion polymerization in the final stage, the polymerization temperature is preferably not higher than 370°C. If this condition is met, the polyamide resins produced are hardly degraded , and are good.

In producing the polyamide resin (A), a catalyst may be used in addition to the above-mentioned terminal-blocking agent.

For example, the catalyst includes phosphoric acid, phosphorous acid, hypophosphorous acid, and their salts and esters. The salts and esters include, for example, salts of phosphoric acid, phosphorous acid or hypophosphorous acid with a metal such as potassium, sodium, magnesium, vanadium, calcium, zinc, cobalt, manganese, tin, tungsten, germanium, titanium or antimony; ammonium phosphate, phosphite or hypophosphite; as well as $C_{1-18}$ alkyl or $C_{6-18}$ aryl (e.g. ethyl, isopropyl, butyl, hexyl, isodecyl, octadecyl, decyl, stearyl, or phenyl) phosphate, phosphite or hypophosphite.

Preferably, the intrinsic viscosity [η] of the polyamide resin (A) for use in the invention, measured in concentrated sulfuric acid at 30°C, falls between 0.4 and 3.0 dl/g, more preferably between 0.5 and 2.0 dl/g, even more preferably between 0.6 and 1.5 dl/g. The preferred polyamide resin (A) of which the limiting viscosity falls within the defined range as above gives preferred moldings having better mechanical properties and better heat resistance.

The polyamide resin compositions of the invention contain a polybromostyrene (B) as another constituent ingredient in addition to the above-mentioned polyamide (A), in which from 0.5 to 100 % by weight of the polybromostyrene (B) is a polybromostyrene having an epoxy group (this is hereinafter referred to as "epoxy-containing polybromostyrene"). The polybromostyrene for use in the invention includes those obtained by polymerizing a styrene monomer to give a polystyrene followed by brominating the polystyrene; and those obtained by polymerizing a bromostyrene monomer.

For the epoxy-containing polybromostyrene, preferred is a polybromostyrene that contains epoxy-containing monomer units. Suitable epoxy-containing monomer units are, e.g. ethylenically unsaturated monomers having 4 to 20 carbon atoms, preferably 4 to 10 carbon atoms.

The monomer units are, for example, those derived from glycidyl acrylate, glycidyl methacrylate, glycidyl itaconate, allyl glycidyl ether, 2-methylallyl glycidyl ether, styrene-p-glycidyl ether, 3,4-epoxybutene, 3,4-epoxy-3-methyl-1-butene, 3,4-epoxy-3-methyl-1-pentene, 5,6-epoxy-1-hexene, vinylcyclohexene monoxide and p-glycidylstyrene. Of those, preferred are units derived from glycidyl acrylate and glycidyl methacrylate. The polybromostyrene may contain one or more of these monomer units.

The epoxy-containing monomer unit content of the epoxy-containing polybromostyrene preferably falls between 0.05 and 20 mol%, more preferably between 0.1 and 20 mol%, even more preferably between 0.5 and 20 mol% of all the structure units of the polybromostyrene. If the epoxy-containing monomer unit content thereof is smaller than 0.05 mol%, the epoxy-containing polybromostyrene is poorly compatible with the polyamide resin (A). If so, the resulting polyamide resin composition will be not good since its mechanical properties are not good and the appearance of its moldings is not good. On the other hand, if the epoxy-containing monomer unit content of the polybromostyrene is larger than 20 mol%, the melt viscosity of the polyamide resin (A) mixed with the polybromostyrene will increase.

The polybromostyrene that containsepoxy-containing monomer units such as those mentioned above can be produced, for example, according to <1> a method that comprises polymerizing a styrene monomer to prepare a polystyrene, then brominating the polystyrene, and thereafter adding an epoxy-containing monomer to it; <2> a method that comprises polymerizing a styrene monomer to prepare a polystyrene, then adding an epoxy-containing monomer to the polystyrene, and thereafter brominating the resulting polymer; <3> a method that comprises copolymerizing a styrene monomer with an epoxy-containing monomer, and then brominating the resulting polymer; <4> a method that comprises polymerizing a bromostyrene monomer to prepare a bromostyrene polymer, and then adding an epoxy-containing monomer to the polymer; or <5> a method that comprises copolymerizing a bromostyrene monomer with an epoxy-containing monomer. In these methods, the copolymerization may be effected by random copolymerization, block copolymerization or alternate copolymerization. Of these methods of producing epoxy-containing polybromostyrenes, preferred are the methods <1>, <4> and <5> in view of the thermal stability of the products; and more preferred are the methods <4> and <5>.

The proportion of the epoxy-containing polybromostyrene in the polybromostyrene (B) falls between 0.5 and 100 % by weight, but preferably between 5 and 100 % by weight, based on the total weight of the polybromostyrene (B). If the polybromostyrene is contained so that the proportion of the expoxy-containing polybromostyrene falls within the range as above, the polyamide resin composition has good chemical resistance and its moldings have good surface appearance.

Preferably, the molecular weight of the polybromostyrene (B) falls between 5,000 and 500,000, more preferably between 10,000 and 400,000. If the molecular weight of the polybromostyrene (B) is smaller than 5,000, the heat resistance of the polyamide resin composition containing the polybromostyrene (B) might be low; but if larger than 500,000, the melt viscosity thereof might be high.

Preferably, the bromine content of the polybromostyrene (B) falls between 50 and 80 % by weight, more preferably between 55 and 75 % by weight. If its bromine content is smaller than 50 % by weight, a large amount of the polybromostyrene (B) might have to be added to the polyamide resin composition so that the resin composition is satisfactorily resistant to flames, and it might worsen the mechanical properties of the resin composition. On the other hand, if the bromine content of the polybromostyrene (B) therein is higher than 80 % by weight, the heat resistance of the polyamide resin composition tends to be low.

The polyamide resin composition of the invention contains from 1 to 100 parts by weight of the polybromostyrene (B), relative to 100 parts by weight of the polyamide resin (A) therein. Preferably, it contains from 10 to 80 parts by weight of the polybromostyrene (B). If the content of the polybromostyrene (B) therein is smaller than 1 part by weight, the flame retardancy of the polyamide resin composition tends to be low;but if it is larger than 100 parts by weight, the chemical resistance, the mechanical properties and the thermal properties of the polyamide resin composition tend not to be good.

In the polyamide resin composition of the invention, it is desirable that the polybromostyrene (B) is dispersed in the polyamide resin (A), forming a dispersed phase having a mean dispersion particle size of at most 3 $\mu$m in the continuous phase of the polyamide resin. More preferably, the mean dispersion particle size of the dispersed phase is at most 2 $\mu$m. In the composition, the phase of the polyamide resin and that of the polybromostyrene may be completely mixed with each other to form a uniform phase. Injection moldings of the resin composition
in which the mean dispersion particle size of the dispersed phase falls within the defined range as above are prevented from being roughened on their surface, and when colored, they are prevented from being whitish.

If desired, the polyamide resin composition of the invention may contain a flame-retardant synergist (C) and/or a filler (D).

The flame-retardant synergist (C) includes, for example, antimony trioxide, antimony pentoxide, sodium antimonate, sodium hydroxide, tin oxide, zinc stannate, zinc oxide, iron oxide, magnesium hydroxide, calcium hydroxide, zinc borate, kaolin clay and calcium carbonate. The resin composition may contain one or more of them. These flame-retardant synergists (C) may be treated with any of silane couplers and titanium couplers. Of the above, preferred are zinc borate and zinc stannate. The amount of the flame-retardant synergist (C) that may be in the resin composition preferably falls between 0.1 and 50 parts by weight, more preferably between 1 and 30 parts by weight, relative to 100 parts by weight of the polyamide resin (A) in the resin composition. Containing such a flame-retardant synergist, the polyamide resin composition ensures better flame retardancy even though its flame retardant content is small.

The polyamide resin composition of the invention may optionally contain a filler (D). In this, the filler (D) may be in any form of fibers, powders or cloths.

The fibrous filler includes, for example, organic fibrous fillers such as full-aromatic polyamide fibers and full-aromatic liquid-crystal polyester fibers, for example, polyparaphenylene-terephthalamide fibers, polymetaphenylene-terephthalamide fibers, polyparaphenylene-isophthalamide fibers, polymetaphenylene-isophthalamide fibers, and fibers obtained from condensates of diaminodiphenyl ether and terephthalic or isophthalic acid; and inorganic fibrous fillers such as glass fibers, carbon fibers and boron fibers. Adding such a fibrous filler to the polyamide resin composition of the invention is desirable, since the mechanical strength of the moldings of the composition is enhanced and, in addition the dimensional stability and the water-absorption resistance thereof are also enhanced. Preferably, the mean length of the fibrous filler falls between 0.05 and 50 mm. More preferably, it falls between 1 and 10 mm, since the moldability of the polyamide resin composition containing the filler is much improved and, in addition, the sliding properties, the heat resistance and the mechanical properties of the moldings of the composition are also improved. The fibrous filler may be fabricated into cloths.

The powdery filler includes, for example, silica, silica-alumina, alumina, titanium oxide, zinc oxide, boron nitride, talc, mica, potassium titanate, calcium silicate, magnesium sulfate, aluminium borate, asbestos, glass beads, carbon black, graphite, molybdenum disulfide and polytetrafluoroethylene. Preferably, the powdery filler has a mean particle size of from 0.1 to 200 $\mu$m, more preferably from 1 to 100 $\mu$m. The powdery filler improves the dimensional stability, the mechanical properties, the heat resistance, the chemical properties, the physical properties and the sliding properties of the moldings of the polyamide resin composition containing it.

For the filler (D), one or more of the substances mentioned above may be used either singly or together. Preferably, the amount of the filler (D) that may be in the polyamide resin composition of the invention falls between 0.1 and 200 parts by weight, more preferably between 0.1 and 150 parts by weight, even more preferably between 0.5 and 100 parts by weight, relative to 100 parts by weight of the polyamide resin (A) in the composition. The polyamide resin composition containing the filler within the defined range as above has better moldability and better mechanical properties. In order to improve its dispersibility in the polyamide resin, the filler is preferably subjected to surface treatment with any of silane coupling agents, titanium coupling agents, or other high-molecular or low-molecular weight surface-treating agents.

The polyamide resin composition of the invention may optionally contain any of acid catchers such as hydrotalcite; other different types of polymers such as polyphenylene sulfides, polyolefins, polyesters, aliphatic polyamides, polyphenylene oxides and liquid-crystal polymers; colorants; UV absorbents; light stabilizers; antioxidants such as hindered phenols, thio compounds, phosphorus-containing compounds and amines; antistatic agents; nucleating agents; plasticizers; mold release agents; and lubricants.

The polyamide resin composition of the invention can be produced by mixing the polyamide resin (A), the polybromostyrene (B), and optional ingredients such as flame-retardant synergist (C) and filler (D), and other optional additives such as those mentioned above. For producing it, for example, employed is a method of adding the polybromostyrene (B) to the reaction system in which the polyamide resin (A) is prepared through polycondensation; a method of blending the polyamide resin (A), the polybromostyrene (B) and other optional ingredients all in dry; or a method of kneading them in melt in an extruder. In general, the method of kneading them in melt in an extruder is preferred. For this, the extruder is preferably a twin-screw extruder, and the temperature at which they are kneaded in melt preferably falls between 280 and 340°C.

The polyamide resin composition of the invention may be molded into moldings of different shapes in any ordinary molding methods generally employed for molding ordinary thermoplastic resin compositions, for example, through injection molding, extrusion molding, press molding, blow molding, calender molding or cast molding. For example, to obtain moldings of a predetermined shape, the polyamide resin composition is melted in the cylinder of an injection-molding machine which is so controlled that its cylinder temperature may fall between the melting point of the polyamide resin and 350°C, and then introduced (injected) into the mold of a predetermined shape in the machine. To obtain fibrous moldings, the polyamide resin composition is melted in an extruder which is so controlled that its cylinder temperature may fall within the defined range as above, and then spun out through the spinneret nozzle of the extruder. To obtain film or sheet moldings, the polyamide resin composition is melted in an extruder which is so controlled that its cylinder temperature may fall within the defined range as above and is thenextruded out through the T-die of the extruder. The moldings thus produced according to the methods as above may be coated with paint, metal, or other different types of polymers to form a coating layer on their surfaces.

EXAMPLES

The invention is described in detail with reference to the following Examples, which, however, are not intended to restrict the scope of the invention. In the Examples, the mean dispersion particle size of the flame retardants used, and the flame retardancy, the chemical resistance and the blistering resistance of the samples produced were measured and tested according to the methods mentioned below.

Mean dispersion particle size of organic halogen compound:

A molded sample to be tested is frozen and cut, and its cut surface is etched in chloroform at 80°C for 1 hour. Thus etched, the surface is observed with a scanning electronic microscope, and its SEM pictures are taken. On the picture, the dispersion particle size, d, and the number of particles, n, are read,and the mean particle size of the dispersed phase is obtained according to the following equation.

$$\text{Mean Particle Size} = (\Sigma d^4 \cdot n) / (\Sigma d^3 \cdot n)$$

Flame retardancy:

This is measured according to the UL-94 Standards in the manner mentioned below. A test piece of 1 mm thickness which was prepared through injection molding is vertically fixed with its top end being clamped. Its bottom end is exposed to a predetermined flame for 10 seconds, and then separated from it. The burn time of the test piece is read (first test). After the test piece has been spontaneously extinguished, its bottom end is again exposed to the flame, and then separated from it, and the burn time of the test piece is read (second test). Five test pieces of one sample are subjected to the same flame test in that manner as above. Five data of the burn time in the first test and five data thereof in the second test, that is, 10 data of one sample are thus obtained. The total of those 10 data is represented by T; and the maximum value thereof is by M. The samples of which T is up to 50 seconds and M is up to 10 seconds, which did not burn to the clamped top end, and of which the burnt melt of the test piece having dropped onto a cotton cloth (this is disposed at a position 12 inches below the test piece) did not ignite the cotton cloth rank as the class "V-0"; the samples of which T is up to 250 seconds and M is up to 30 seconds and which are the same as those of "V-0" for the other matters rank as the class "V-1"; and the samples of which T is up to 250 seconds and M is up to 30 seconds, which did not burn to the clamped top end, but of which the burnt melt of the test piece having dropped onto a cotton cloth (this is disposed at a position of 12 inches below the test piece) ignited the cotton cloth rank as the class "V-2".

Chemical resistance (in view of the mechanical property of the tested samples):

JIS No. 2 test pieces obtained through injection molding are dipped in methylene chloride for 168 hours. After having been thus dipped, the tensile strength of each test piece is measured according to the tensile strength test method of ASTM D638.

Chemical resistance (in view of the appearance of the tested samples) :

JIS No. 2 test pieces obtained through injection molding are dipped in methylene chloride for 168 hours. After having been thus dipped, the appearance of each test piece is visually checked. The samples with no surface change are good "O"; and those of which the surface turned whitish are bad "×".

Appearance of Moldings:

Moldings having a size of 10 cm (length) × 4 cm (width) × 1 mm (thickness) are prepared through injection molding, and their appearances (color, surface condition) are visually checked. The samples not turned whitish and having a smooth and good surface condition are "good" ; and those turned whitish or having a rough and bad surface condition are "bad".

Blistering resistance:

Moldings having a size of 0.5 mm (thickness) × 10 mm (width) × 30 mm (length) are prepared through injection molding, and conditioned at 40°C and 50 % RH for 72 hours. These are reflowed in an IR furnace (Sanyo Seiko's SMT Scope), for which the temperature profile is as in Fig. 1. A temperature sensor is fitted to the sample tested, with which the temperature profile of the sample is read. In Fig. 1, the monitored peak temperature falls between 240°C and 270°C, and the sample is monitored at intervals of 5°C. After the reflow test, the appearance of the samples is checked. The critical temperature at which the sample tested is neither melted nor blistered is the blistering-resistant temperature of the sample. Blistering is meant to indicate that the surface of the sample tested is swollen to have blisters. The samples which changed at a temperature lower than 250°C are bad "×"; those which changed at a temperature falling between 250 and 260°C are average "Δ"; and the others are good "○".
In the following Examples, Comparative Examples and Reference Examples, the polyamide resins used are as follows:

PA9MT:

This is a polyamide resin in which the dicarboxylic acid units are all terephthalic acid units and the diamine units are comprised of 1,9-nonanediamine units and 2-methyl-1,8-octanediamine units (in a molar ratio of 1,9-nonanediamine units/2-methyl-1,8-octanediamine units of 85/15), and which has an intrinsic viscosity [η] of 1.00 dl/g, a melting point of 308˚C and a degree of terminal-blocking of 90 % (with a terminal-blocking agent benzoic acid).

PA6IT:

This is a polyamide resin in which the dicarboxylic acid units are composed of terephthalic acid units and isophthalic acid units (in a molar ratio of terephthalic acid units/isophthalic acid units of 60/40) and the diamine units are all 1,6-hexanediamine units, and which has a melting point of 312˚C, an intrinsic viscosity [η] of 1.02 dl/g and a degree of terminal-blocking of 91 % (with a terminal-blocking agent benzoic acid).

Examples 1 to 5:

The polyamide resin as above was premixed with a polybromostyrene containing 2.0 mol% of glycidyl methacrylate added thereto (this is hereinafter referred to as "GMA-PBrS"), a polybromostyrene (Great Lakes Chemical's PBS-64 - this is hereinafter referred to as "PBrS"), zinc borate (Borax's Fire Break 415), a mixture of sodium oxide and antimony pentoxide (Nissan Chemical's Sun-Epoc NA-1070L), zinc stannate (Nippon Light Metal's FLAMTARD-S) and glass fibers (Nitto Boseki's CS-3J-2565), in the ratios indicated in the following Table 1. The resulting mixture was fed into a twin-screw extruder (Nippon Seikosho's TEX44C), kneaded in melt at a cylinder temperature of 320˚C, extruded out, then cooled and cut into pellets of the polyamide resin composition. The pellets were molded in an injection molding machine (cylinder temperature 330˚C; mold temperature 150˚C), and the resulting moldings were tested according to the methods mentioned above. The test results are shown in Table 1.

Comparative Examples 1 and 2:

In the same manner as in Examples 1 to 5, the components except GMA-PBrS were mixed in the ratios indicated in Table 1 below, and pelletized into pellets of the polyamide resin composition. The pellets were molded in an injection molding machine (cylinder temperature 330˚C; mold temperature 150˚C), and the resulting moldings were tested according to the methods mentioned above. The test results are shown in Table 1.

Comparative Example 3:

PA66 (Asahi Chemical's Leona 1300S) was pre-mixed with GMA-PBrS, a mixture of sodium oxide and antimony pentoxide (Nissan Chemical's Sun-Epoc NA-1070L) and glass fibers (Nitto Boseki's CS-3J-256S) in the ratios indicated in Table 1 below. The resulting mixture was fed into a twin-screw extruder (Nippon Seikosho's TEX44C), kneaded in melt at a cylinder temperature of 280˚C, extruded out, then cooled and cut into pellets of the polyamide resin composition. The pellets were molded in an injection molding machine (cylinder temperature 280˚C; mold temperature 80˚C), and the resulting moldings were tested according to the methods mentioned above. The test results are shown in Table 1.

Table 1

|  | Example 1 | Example 2 | Example 3 | Example 4 | Example 5 | Comp. Ex.1 | Comp. Ex. 2 | Comp. Ex. 3 |
|---|---|---|---|---|---|---|---|---|
| PA9MT (wt.pts) | 100 |  | 100 | 100 | 100 | 100 |  |  |
| PA61T (wt.pts) |  | 100 |  |  |  |  | 100 |  |
| PA66 (wt.pts) |  |  |  |  |  |  |  | 100 |
| GMA-PBrS (wt.pts) | 68 | 68 | 68 | 68 | 34 |  |  | 68 |
| PBrS (wt.pts) |  |  |  |  | 34 | 68 | 68 |  |
| Zinc Borate (wt.pts) | 14 | 14 |  |  | 14 | 14 | 14 |  |
| $Na_2O/Sb_2O_5$ (wt.pts) |  |  | 14 |  |  |  |  | 14 |

(continued)

| | Example 1 | Example 2 | Example 3 | Example 4 | Example 5 | Comp. Ex.1 | Comp. Ex. 2 | Comp. Ex. 3 |
|---|---|---|---|---|---|---|---|---|
| Zinc Stannate (wt.pts) | | | | 14 | | | | |
| Glass Fibers (wt.pts) | 89 | 89 | 89 | 89 | 89 | 89 | 89 | 89 |
| Mean Dispersion Particle Size ($\mu$m) | 0.6 | 0.7 | 0.6 | 0.6 | 0.8 | 2.8 | 3.0 | 1.0 |
| Flame Retardancy | V-0 | V-0 | V-0 | V-0 | V-0 | V-0 | V-0 | V-0 |
| Chemical Resistance 1 (strength retentiveness) | 100 | 97 | 100 | 100 | 100 | 96 | 90 | 65 |
| Chemical Resistance 2 (appearance of moldings) | ○ | ○ | ○ | ○ | ○ | × | × | × |
| Appearance of Moldings | good | good | good | good | good | bad | bad | good |
| Blistering Resistance | ○ | △ | ○ | ○ | ○ | ○ | △ | × |

From the results shown in Table 1 above, it is understood that the polyamide resin compositions of Examples 1 to 5, which contain a semiaromatic polyamide and an epoxy-containing polybromostyrene in the ratio defined in the invention, are better than those of Comparative Examples 1 and 2, which do not contain an epoxy-containing polybromostyrene, in that the mean dispersion particle size of the dispersed phase in them is small and that their chemical resistance and surface appearance are extremely good.

In addition, it is also understood that the polyamide resin compositions of Examples 1 to 5 are better than that of Comparative Example 3 which contains an aliphatic polyamide resin and not a semiaromatic polyamide resin, in that their chemical resistance and blistering resistance are extremely good.

The present invention thus provides excellent polyamide resin compositions and their moldings which have good flame retardancy, good chemical resistance, good surface appearance and good blistering resistance.

While the invention has been described in detail and with reference to specific embodiments thereof, it will be apparent to one skilled in the art that various changes and modifications can be made therein without departing from the scope thereof.

**Claims**

1.   A polyamide resin composition comprising 100 parts by weight of a polyamide resin (A) that comprises dicarboxylic acid units (a) containing from 60 to 100 mol% of terephthalic acid units and diamine units (b) containing from 60 to 100 mol% of C6-18 aliphatic alkylenediamine units, and from 1 to 100 parts by weight of a polybromostyrene (B), in which from 0.5 to 100 % by weight of the polybromostyrene (B) is a polybromostyrene having an epoxy group, wherein the C6-18 aliphatic alkylenediamine units constituting the polyamide resin (A) are 1, 9-nonairediamine units and/or 2-methyl-1,8-octanediamine units.

2.   The polyamide resin composition as claimed in claim 1, wherein the polyamide resin (A) has an intrinsic viscosity measured in concentrated sulfuric acid at 30˚C, of from 0.4 to 3.0 dl/g.

**3.** The polyamide resin composition as claimed in claim 1 or 2, which further contains from 0.1 to 50 parts by weight of a flame-retardant synergist (C) and/or from 0.1 to 200 parts by weight of a filler (D), relative to 100 parts of the polyamide resin (A) in the composition.

**4.** Moldings of the polyamide resin composition of any one of claims 1 to 3.


**Patentansprüche**

**1.** Polyamidharz-Zusammensetzung, umfassend 100 Gewichtsteile eines Polyamidharzes (A), das Dicarbonsäureeinheiten (a), die 60 bis 100 Mol-% Terephthalsäureeinheiten enthalten, und Diamineinheiten (b), die 60 bis 100 Mol-% aliphatische $C_{6-18}$-Alkylendiamineinheiten enthalten, umfasst, und 1 bis 100 Gewichtsteile eines Polybromstyrols (B), bei dem 0,5 bis 100 Gew.-% des Polybromstyrols (B) ein Polybromstyrol mit einer Epoxygruppe ist, wobei die aliphatischen $C_{6-18}$-Alkylendiamineinheiten, die das Polyamidharz (A) bilden, 1,9-Nonandiamineinheiten und/oder 2-Methyl-1,8-octandiamineinheiten sind.

**2.** Polyamidharz-Zusammensetzung nach Anspruch 1, wobei das Polyamidharz (A) eine Grenzviskosität, gemessen in konzentrierter Schwefelsäure bei 30˚C, von 0,4 bis 3,0 dl/g aufweist.

**3.** Polyamidharz-Zusammensetzung nach Anspruch 1 oder 2, die ferner 0,1 bis 50 Gewichtsteile eines flammhemmenden Synergisten (C) und/oder 0,1 bis 200 Gewichtsteile eines Füllstoffs (D), bezogen auf 100 Teile des Polyamidharzes (A) in der Zusammensetzung, enthält.

**4.** Formteile aus der Polyamidharz-Zusammensetzung nach einem der Ansprüche 1 bis 3.


**Revendications**

**1.** Composition à base de résine polyamide comprenant 100 parties en poids d'une résine polyamide (A) qui comprend des unités d'acide dicarboxylique (a) contenant de 60 à 100% en mole d'unités d'acide téréphtalique et des unités de diamine (b) contenant de 60 à 100% en mole d'unités d'alkylènediamine aliphatique en C6-C18, et de 1 à 100 parties en poids d'un polybromostyrène (B), de 0,5 à 100% en poids du polybromostyrène (B) étant un polybromostyrène ayant un groupement époxy, dans laquelle les unités d'alkylènediamine aliphatique en C6-C18 constituant la résine polyamide (A) sont des unités de 1,9-nonanediamine et/ou des unités de 2-méthyl-1,8-octadiamine.

**2.** Composition à base de résine polyamide selon la revendication 1, dans laquelle la résine polyamide (A) a une viscosité intrinsèque, mesurée dans de l'acide sulfurique concentré à 30˚C, de 0,4 à 3,0 dl/g.

**3.** Composition à base de résine polyamide selon la revendication 1 ou 2, qui contient en plus de 0,1 à 50 parties en poids d'une substance synergique ignifuge (C) et/ou de 0,1 à 200 parties en poids d'une charge (D), par rapport à 100 parties de la résine polyamide (A) dans la composition.

**4.** Moulages de la composition à base de résine polyamide selon l'une quelconque des revendications 1 à 3.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3239755 A
- JP 4096970 A
- JP 5320503 A
- JP 6263985 A
- US 5354802 A